# EUROPEAN PATENT APPLICATION

(11) **EP 4 195 042 A1**
(43) Date of publication of application: **14.06.2023**
(21) Application number: 21865961.3
(22) Date of filing: 07.09.2021
(51) Int. Cl.: G06F 9/451, G06F 3/14

(54) **DISPLAY METHOD AND ELECTRONIC DEVICE**

(30) Priority: 10.09.2020 CN 202010949121; 22.10.2020 CN 202011142497
(71) Applicant: Huawei Technologies Co., Ltd., Shenzhen, Guangdong 518129 (CN)
(72) Inventor: XU, Qiannan, Shenzhen Guangdong 518129 (CN)
(74) Representative: Pfenning, Meinig & Partner mbB
(86) International application number: PCT/CN2021/116902
(87) International publication number: WO 2022/052907

(57) **Abstract**

A display method and an electronic device are provided, and relate to the field of terminal technologies. The method is applied to a system including a first electronic device and a second electronic device, and specifically includes: establishing, by the first electronic device, a connection to the second electronic device, where the first electronic device includes a first application, and then sending information about the first application to the second electronic device; displaying, by the second electronic device, an icon of the first application on a display in response to the received information about the first application; in response to an operation performed by a user on the icon of the first application on the second electronic device, displaying, by the second electronic device, a navigation bar in a first region of the display and displaying a first interface of the first application in a second region of the display; detecting a first operation performed on the second electronic device; and hiding, by the second electronic device, the navigation bar and displaying the first interface of the first application in full screen. According to this technical solution, after a mobile phone and a head unit are successfully connected, a user can perform an operation on the head unit, to display an interface of an application in full screen.

## Description

### CROSS-REFERENCE TO RELATED APPLICATIONS

This application claims priority to Chinese Patent Application No. 202010949121.6, filed with the China National Intellectual Property Administration on September 10, 2020 and entitled "DISPLAY METHOD AND ELECTRONIC DEVICE", which is incorporated herein by reference in its entirety. This application claims priority to Chinese Patent Application No. 202011142497.2, filed with the China National Intellectual Property Administration on October 22, 2020 and entitled "DISPLAY METHOD AND ELECTRONIC DEVICE", which is incorporated herein by reference in its entirety.

### TECHNICAL FIELD

This application relates to the field of terminal technologies, and in particular, to a display method and an electronic device.

### BACKGROUND

With the introduction of an in-vehicle system (such as HiCar^{®}), after a mobile phone and a head unit are successfully connected, a service provided by an application installed on the mobile phone can be extended to a vehicle, so that a user can make a call, navigate, listen to music, or the like while driving. Generally, a display of the head unit, that is, a head unit screen, is a display medium used by an application to provide a service for the user. However, in the conventional technology, an interface of the application cannot fully occupy the entire head unit screen.

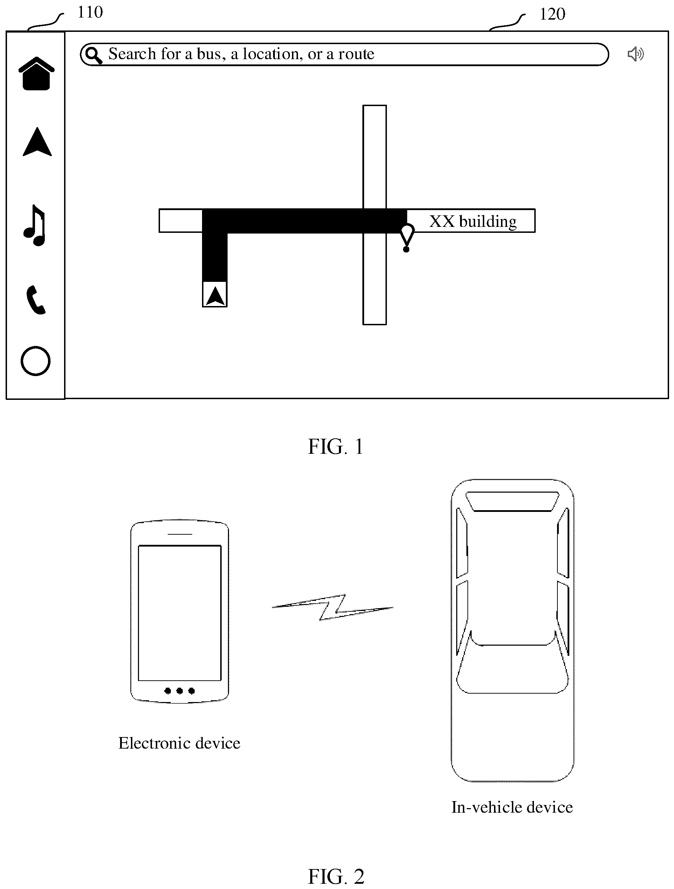

For example, Baidu Map^{®} installed on a mobile phone is used as an example. As shown in FIG. 1, an interface of Baidu Map is displayed in a region 120 of a head unit screen, and a navigation bar is displayed in a region 110 of the head unit screen. The navigation bar usually includes one or more controls, for example, a control configured to implement switching of frequently used applications, a control configured to control return to a home screen, and a control configured to start a searching function, to facilitate use by a user. It can be learned from FIG. 1 that the interface of Baidu Map can be displayed only in the region 120, and cannot occupy the entire head unit screen.

### SUMMARY

Embodiments of this application provide a display method and an electronic device, so that after a mobile phone is successfully connected to a head unit, a user can perform an operation on the head unit to enable the head unit to display an interface of a corresponding application in full screen, to facilitate use by the user.

According to a first aspect, an embodiment of this application provides a display method. The method is applied to a system including a first electronic device and a second electronic device, and specifically includes: establishing, by the first electronic device, a connection to the second electronic device, where the first electronic device includes a first application, and then sending, by the first electronic device, information about the first application to the second electronic device; displaying, by the second electronic device, an icon of the first application on a display in response to the received information about the first application; in response to an operation performed by a user on the icon of the first application on the second electronic device, displaying, by the second electronic device, a navigation bar in a first region of the display and displaying a first interface of the first application in a second region of the display; detecting a first operation performed on the second electronic device; and in response to the first operation, hiding, by the second electronic device, the navigation bar and displaying the first interface of the first application on the display in full screen.

In the embodiments of this application, after establishing a connection to the second electronic device, the first electronic device may send the information about the first application to the second electronic device, so that the second electronic device can display the icon of the first application. It should be noted that the information about the first application may include the icon, name, version information, and the like of the first application. When the second electronic device displays the navigation bar in the first region of the display, and displays the first interface of the first application in the second region of the display, if the user performs the first operation on the second electronic device, the second electronic device may hide the navigation bar and display the first interface of the first application in full screen. When the first electronic device is a mobile phone, and the second electronic device is a head unit, by using the foregoing technical solution, a user can display an interface of a corresponding application in full screen on the head unit as required.

In a possible design, after the second electronic device hides the navigation bar, and displays the first interface of the first application on the display in full screen, a second operation performed on the second electronic device is detected.

In response to the second operation, the second electronic device displays the navigation bar in the first region of the display and displays the first interface of the first application in the second region of the display.

According to the foregoing technical solution, the user may further exit, according to a requirement of the user, an interface of an application displayed in full screen.

In a possible design, the second electronic device displays a prompt box in response to the operation performed by the user on the icon of the first application on the second electronic device, where the prompt box is used to prompt the user with an operation manner of controlling full-screen display or non-full-screen display of an interface of an application. Therefore, it is convenient for the user to obtain corresponding information.

In a possible design, the first electronic device displays a second interface in response to an operation performed by the user on the prompt box, where the second interface includes a first option. A full-screen operation manner of an application is set to a third operation in response to an operation performed by the user on the first option. Therefore, the user can control full-screen display of the application by customizing a corresponding operation according to a requirement of the user, so as to meet a use habit of the user and help improve user experience.

In a possible design, the first electronic device displays a third interface of the first application in response to the operation performed by the user on an icon of the first application on the first electronic device. When the second electronic device displays the navigation bar in the first region of the display, and displays the first interface of the first application in the second region of the display, a fourth operation performed on the first electronic device is detected. In response to the fourth operation, the second electronic device hides the navigation bar and displays the first interface of the first application on the display in full screen. Therefore, when the first application is also started on the first electronic device, the user can control to display the first interface of the first application on the second electronic device in full screen.

In a possible design, when the second electronic device hides the navigation bar and displays the first interface of the first application on the display in full screen, a fifth operation performed on the first electronic device is detected. In response to the fifth operation, the second electronic device displays the navigation bar in the first region of the display and displays the first interface of the first application in the second region of the display. Therefore, when the first application is also started on the first electronic device, the user can control to exit full-screen display of the first interface of the first application on the second electronic device.

In a possible design, the first electronic device is a mobile phone or a tablet computer, and the second electronic device is a head unit.

According to a second aspect, an embodiment of this application provides a display method. The method specifically includes:
establishing, by a first electronic device, a connection to a second electronic device, where the first electronic device includes a first application, and the second electronic device displays an icon of the first application; receiving, by the first electronic device, first indication information from the second electronic device, where the first indication information is used to indicate an operation performed by a user on the icon of the first application on the second electronic device; sending, by the first electronic device, a first interface of the first application to the second electronic device in response to the foregoing operation, so that the second electronic device displays a navigation bar in a first region of the display, and displays the first interface of the first application in a second region of the display;
receiving, by the first electronic device, second indication information from the second electronic device, where the second indication information is used to indicate a first operation performed by the user on the second electronic device; and
sending, by the first electronic device, a first navigation bar hiding message to the second electronic device in response to the received second indication information, where the first navigation bar hiding message is used to indicate the second electronic device to hide the navigation bar and display the first interface of the first application on the display in full screen.

In a possible design, after sending the navigation bar hiding message to the second electronic device, the first electronic device receives third indication information from the second electronic device, where the third indication information is used to indicate a second operation performed by the user on the second electronic device.

The first electronic device sends a first navigation bar display message to the second electronic device in response to the received third indication information, where the first navigation bar display message is used to indicate the second electronic device to display the navigation bar in the first region of the display and display the first interface of the first application in the second region of the display.

In a possible design, the first electronic device receives fourth indication information, where the fourth indication information is used to indicate an operation performed by the user on the icon of the first application on the second electronic device. The first electronic device sends a first message to the second electronic device in response to the received fourth indication information, where the first message is used to indicate the second electronic device to display a prompt box, and the prompt box is used to prompt the user with an operation manner of controlling full-screen display or non-full-screen display of an interface of an application.

In a possible design, the first electronic device receives fifth indication information, where the fifth indication information is used to indicate an operation performed by the user on the prompt box. The first electronic device displays a second interface in response to the received fifth indication information, where the second interface includes a first option. The first electronic device sets a full-screen operation manner of an application to a third operation in response to an operation performed by the user on the first option.

In a possible design, the first electronic device displays a third interface of the first application in response to an operation performed by the user on an icon of the first application on the first electronic device.

When the second electronic device displays the navigation bar in the first region of the display, and displays the first interface of the first application in the second region of the display, the first electronic device detects a fourth operation performed by the user on the first electronic device.

The first electronic device sends second navigation bar hiding information to the second electronic device in response to the fourth operation, where the second navigation bar hiding information is used to indicate the second electronic device to hide the navigation bar and display the first interface of the first application on the display in full screen.

In a possible design, when the second electronic device hides the navigation bar and displays the first interface of the first application on the display in full screen, a fifth operation performed on the first electronic device is detected. The first electronic device sends a second navigation bar display message to the second electronic device in response to the fifth operation, where the second navigation bar display message is used to indicate the second electronic device to display the navigation bar in the first region of the display and display the first interface of the first application in the second region of the display.

According to a third aspect, an embodiment of this application provides an electronic device. The electronic device includes modules/units that perform the method in the second aspect or any one of the possible designs of the second aspect. These modules/units may be implemented by hardware, or may be implemented by hardware executing corresponding software.

According to a fourth aspect, an embodiment of this application provides a chip. The chip is coupled to a memory in an electronic device, and is configured to invoke a computer program stored in the memory and perform the technical solution in the second aspect and any one of the possible designs of the second aspect of the embodiments of this application. In the embodiments of this application, "coupling" means that two components are directly or indirectly combined with each other.

According to a fifth aspect, an embodiment of this application provides a computer-readable storage medium, where the computer-readable storage medium includes a computer program, and when the computer program runs on an electronic device, the electronic device is enabled to perform the technical solution in the second aspect and any one of the possible designs of the second aspect.

According to a sixth aspect, an embodiment of this application provides a computer program, where the computer program includes instructions, and when the instructions are run on a computer, the computer is enabled to perform the technical solution in the second aspect and any one of the possible designs of the second aspect.

According to a seventh aspect, an embodiment of this application provides a graphical user interface on an electronic device, where the electronic device has a display, one or more memories, and one or more processors, the one or more processors are configured to execute one or more computer programs stored in the one or more memories, and the graphical user interface includes a graphical user interface displayed when the electronic device performs the technical solution in the second aspect and any one of the possible designs of the second aspect.

For beneficial effects of the second aspect to the seventh aspect, refer to the beneficial effects of the first aspect. Details are not described again.

### BRIEF DESCRIPTION OF DRAWINGS

FIG. 1 is a schematic diagram of a head unit interface according to an embodiment of this application;
FIG. 2 is a schematic diagram of a system architecture according to an embodiment of this application;
FIG. 3 is a schematic diagram of a hardware structure of a mobile phone according to an embodiment of this application;
FIG. 4 is a schematic diagram of a software structure of an application HiCar installed on a mobile phone according to an embodiment of this application;
FIG. 5A-1 and FIG. 5A-2 are a schematic diagram of a head unit interface according to an embodiment of this application;
FIG. 5B-1 and FIG. 5B-2 are a schematic diagram of a mobile phone interface according to an embodiment of this application;

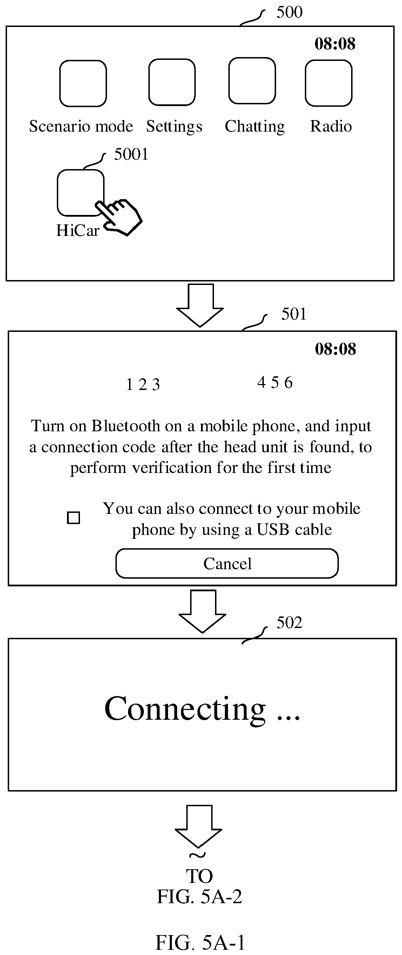

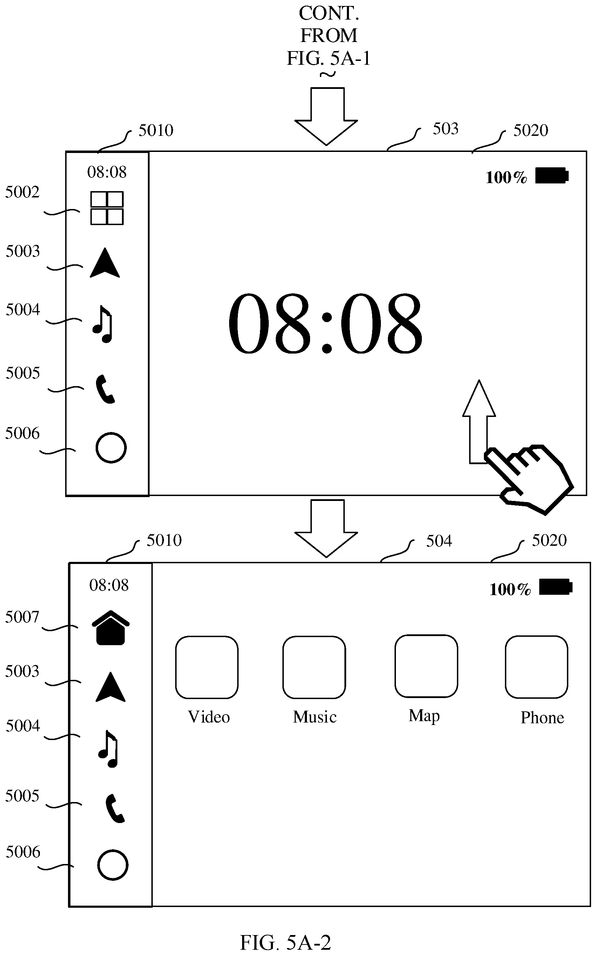

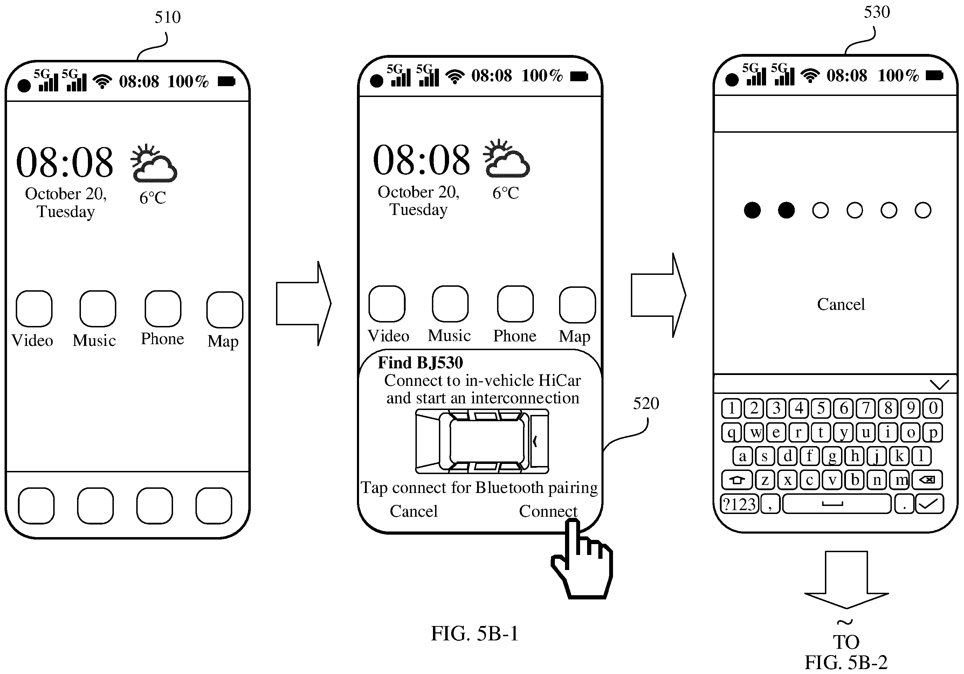

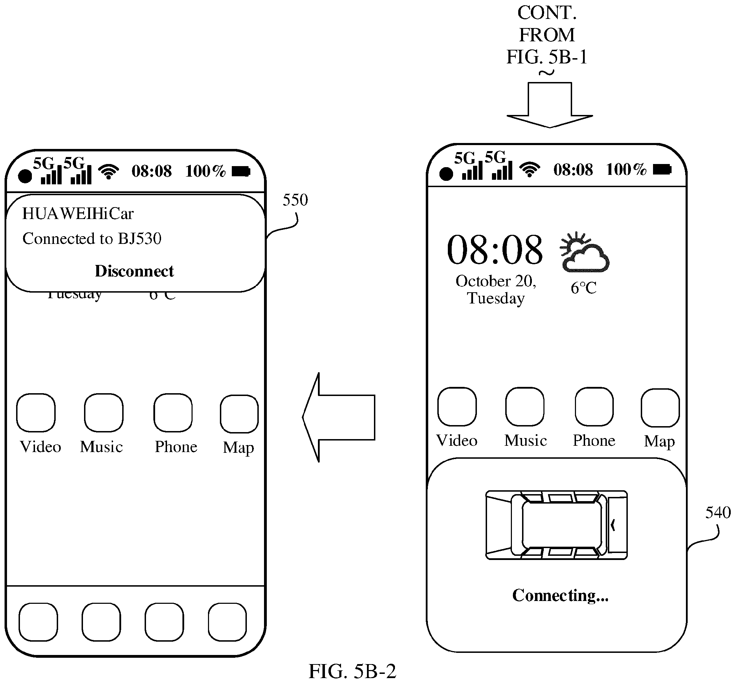

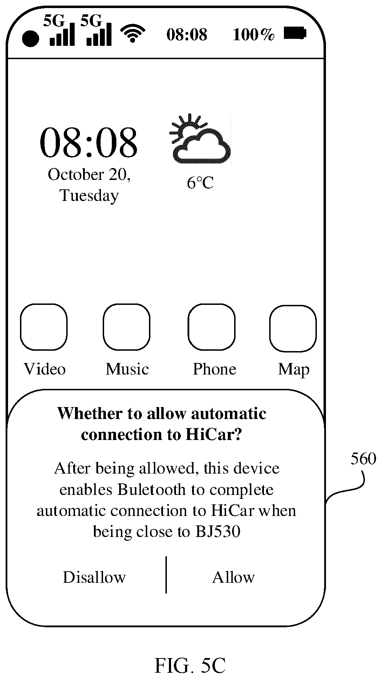

FIG. 5C is another schematic diagram of a mobile phone interface according to an embodiment of this application;

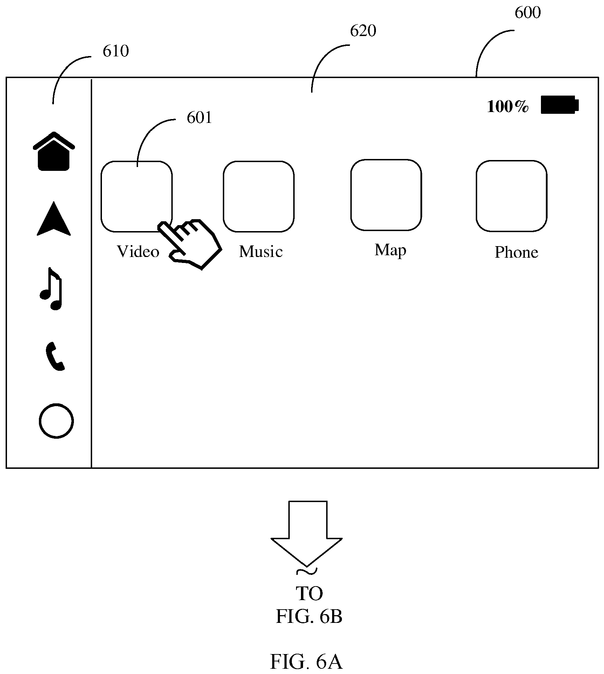

FIG. 6A to FIG. 6C are another schematic diagram of a head unit interface according to an embodiment of this application;

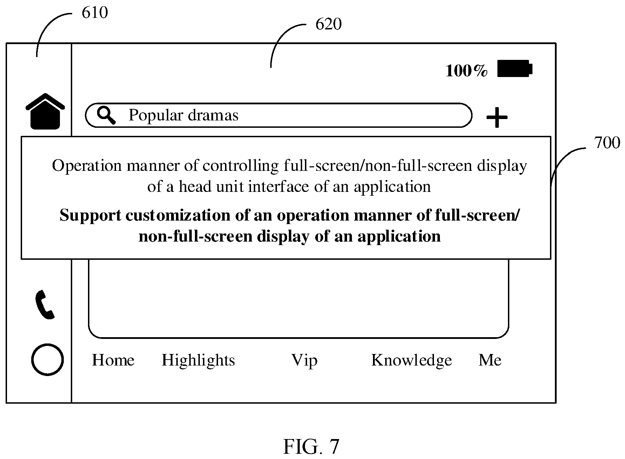

FIG. 7 is another schematic diagram of a head unit interface according to an embodiment of this application;

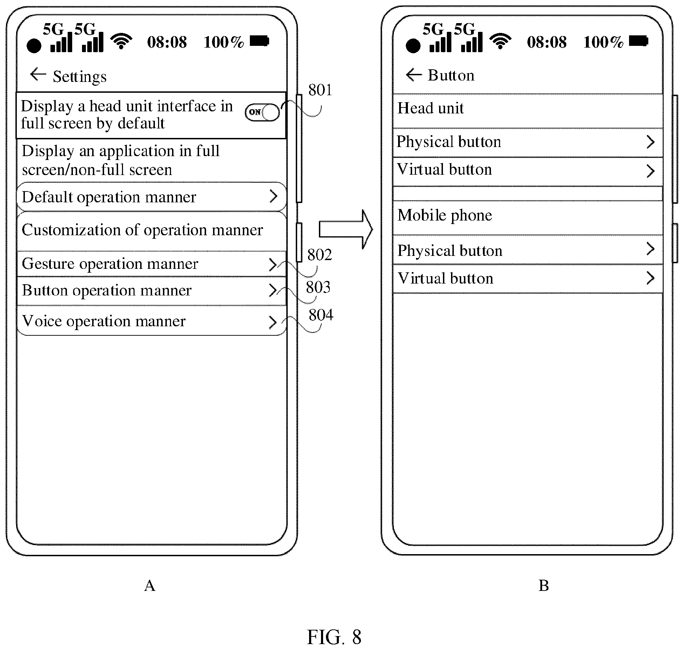

FIG. 8 is a schematic diagram of a setting interface of an in-vehicle system according to an embodiment of this application;

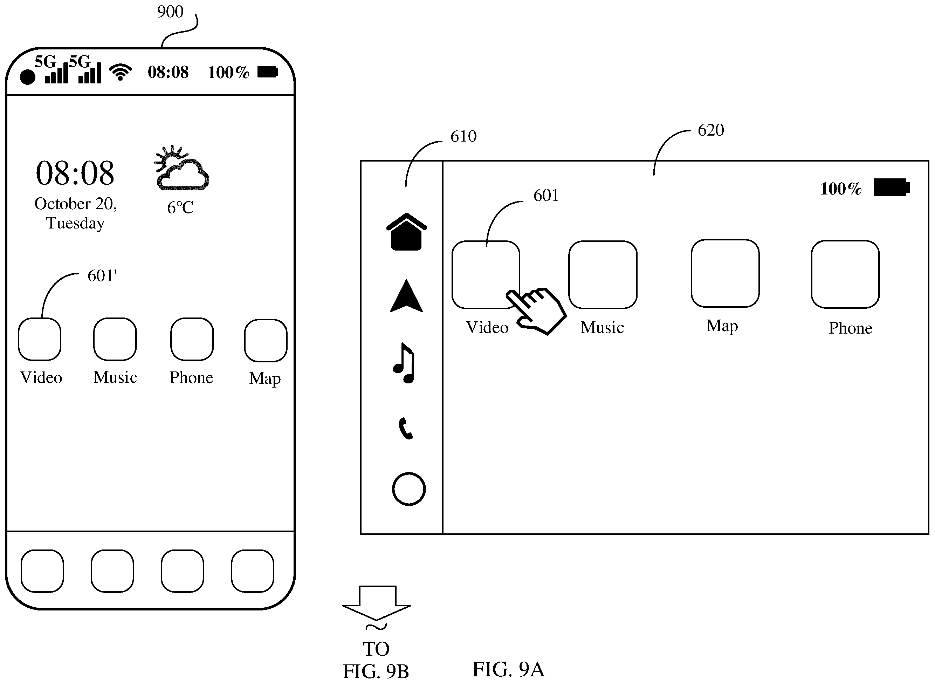

FIG. 9A to FIG. 9C are a schematic diagram of a head unit interface and a mobile phone interface according to an embodiment of this application;

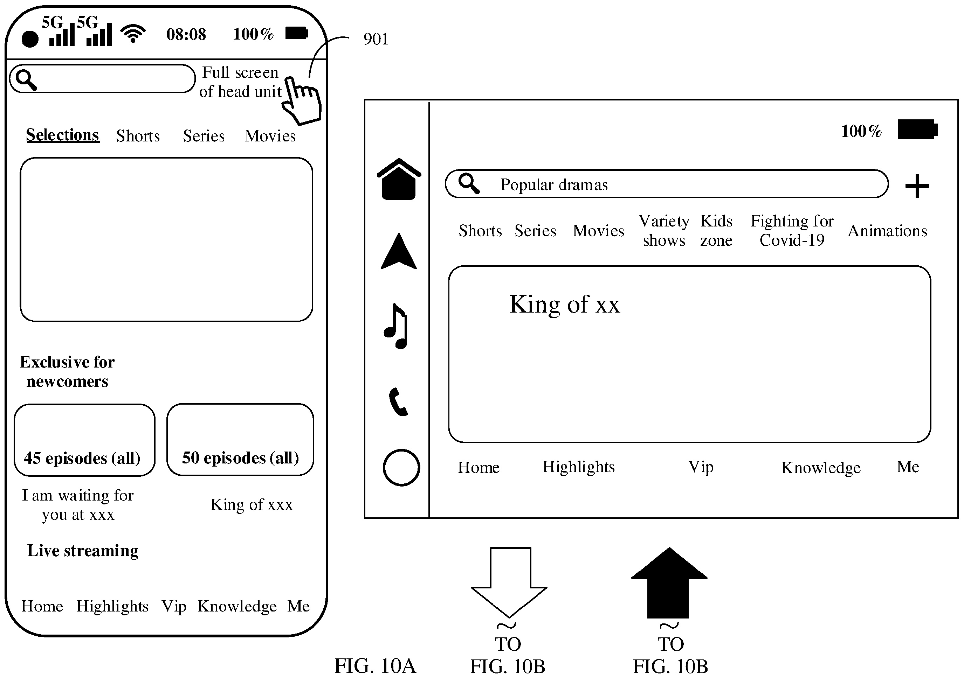

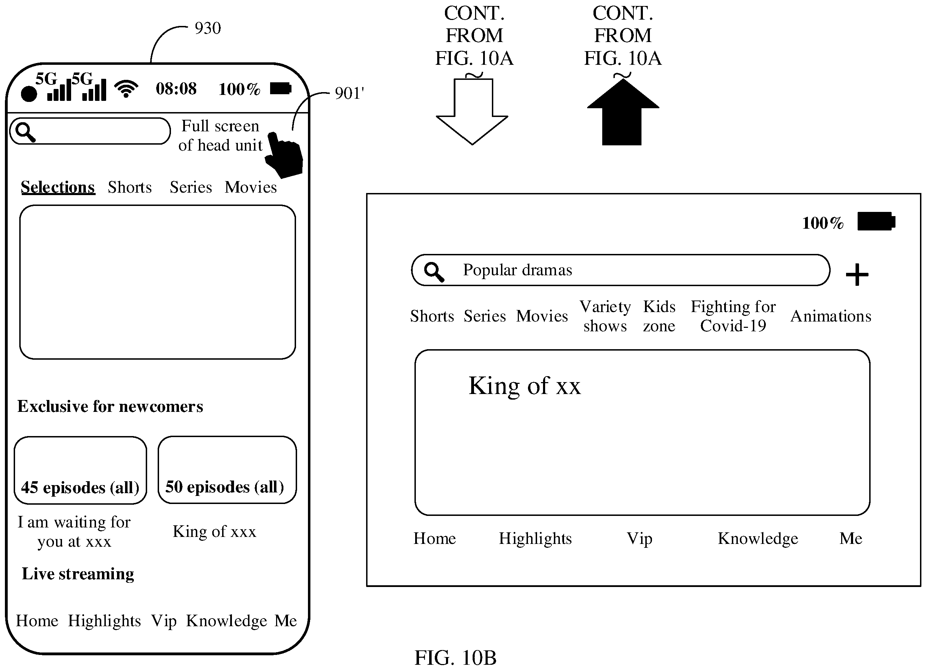

FIG. 10A and FIG. 10B are another schematic diagram of a head unit interface and a mobile phone interface according to an embodiment of this application;

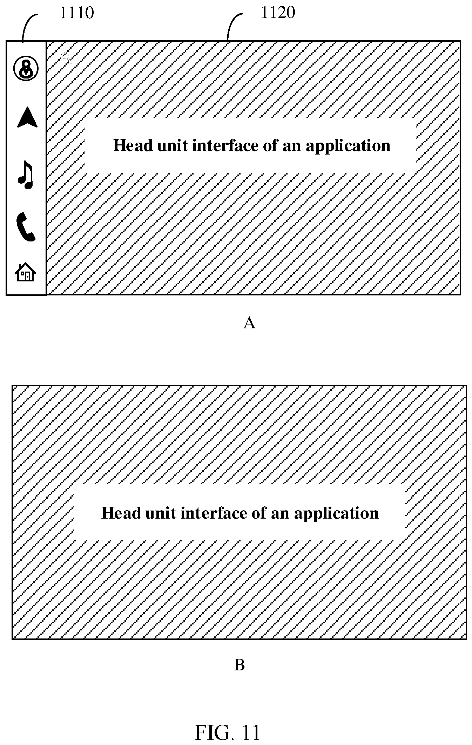

FIG. 11 is another schematic diagram of a head unit interface according to an embodiment of this application;

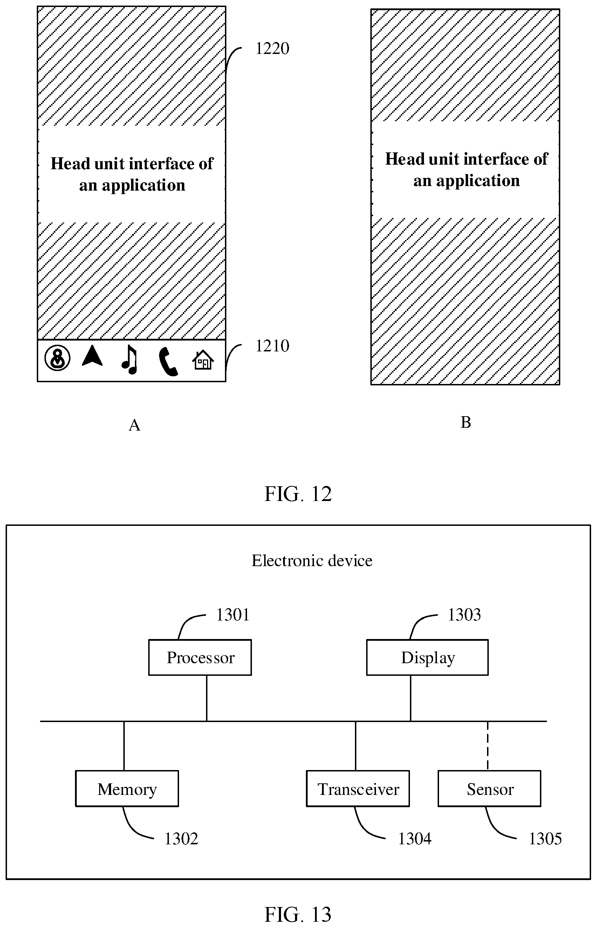

FIG. 12 is another schematic diagram of a head unit interface according to an embodiment of this application; and
FIG. 13 is a schematic diagram of a structure of an electronic device according to an embodiment of this application.

### DESCRIPTION OF EMBODIMENTS

An in-vehicle system, such as HiCar, is an application that supports mapping of an application installed on a mobile phone to a head unit. Specifically, after the mobile phone and the head unit are successfully connected, an application (such as Phone, Map, or Music) installed on the mobile phone may be mapped to the head unit. Therefore, an icon of an application installed on the mobile phone may be displayed on the head unit, so that the user can use, by using the head unit, a service provided by the application installed on the mobile phone. This not only facilitates a call, navigation, music listening, or the like when the user is driving, but also helps improve driving safety of the user.

In some embodiments, the in-vehicle system may support the mobile phone in mapping some applications installed on the mobile phone to the head unit. For example, these applications are selected by the mobile phone from all applications installed on the mobile phone. For example, the mobile phone selects, with reference to setting of the user, from all applications installed on the mobile phone.

Generally, a display of the head unit, that is, a head unit screen, is a display medium used by an application to provide a service for a user. However, in the conventional technology, an interface of the application cannot fully occupy the entire head unit screen.

In view of this, an embodiment of this application provides a display method. After a head unit is successfully connected to a mobile phone, when the head unit displays an interface of an application, a user may perform a first operation on the head unit according to a requirement of the user, so that the head unit can display the interface of the application on the head unit screen in full screen in response to the first operation. Certainly, the user may also perform a second operation on the head unit according to a requirement of the user, so that the head unit may exit full-screen display for the application in response to the second operation, so as to facilitate use by the user.

In some embodiments, the first operation and/or the second operation may be customized by the user on the mobile phone according to a requirement of the user, so that the operation can better conform to a use habit of the user, thereby helping improve user experience. Alternatively, the first operation and/or the second operation may be a default operation of the in-vehicle system. This is not limited.

It should be understood that "at least one" in embodiments of this application refers to one or more. "A plurality of means two or more than two. "And/or" describes an association relationship between associated objects, and indicates that three relationships may exist. For example, A and/or B may represent the following three cases: Only A exists, both A and B exist, and only B exists. A and B may be singular or plural. The character "/" usually indicates an "or" relationship between associated objects. "At least one of the following pieces (items)" or a similar expression thereof indicates any combination of these items, including a single item (piece) or any combination of a plurality of items (pieces). For example, at least one of a, b, or c may represent seven cases: a, b, c, a and b, a and c, b and c, and a, b and c. Each of a, b, and c may be an element, or may be a set including one or more elements.

In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Exactly, the word "an example" is used to present a concept in a specific manner.

It should be noted that, in embodiments of this application, terms such as "first" and "second" are only used for a purpose of distinction in description, and should not be understood as an indication or implication of relative importance or an indication or implication of a sequence.

FIG. 2 is an architectural diagram of a system according to an embodiment of this application. The system includes an electronic device and an in-vehicle device. Both the electronic device and the in-vehicle device support an in-vehicle system. It should be noted that, for the electronic device, the in-vehicle system may be installed before the electronic device is delivered from a factory, or may be installed by a user according to a requirement of the user. This is not limited. For example, the electronic device in the embodiments of this application may be a portable terminal, for example, a mobile phone, a tablet computer, a notebook computer, or a wearable device (for example, a smartwatch). For example, the portable terminal includes but is not limited to carrying IOS^{®}, Android^{®}, Windows^{®}, or another operating system. In addition, the electronic device in the embodiments of this application is not limited to a portable terminal, for example, an in-vehicle terminal. The in-vehicle device in the embodiments of this application may be a head unit or the like. This is not limited.

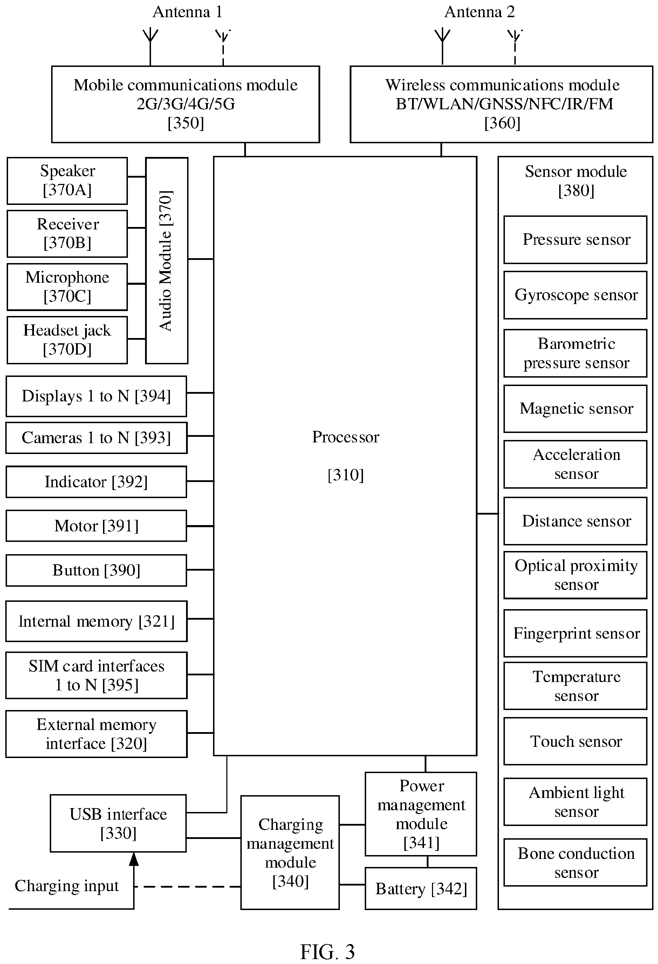

That the electronic device is a mobile phone is used as an example. For example, FIG. 3 is a schematic diagram of a hardware structure of a mobile phone according to an embodiment of this application. Specifically, as shown in the figure, the mobile phone includes a processor 310, an external memory interface 320, an internal memory 321, a universal serial bus (universal serial bus, USB) port 330, a charging management module 340, a power management module 341, a battery 342, an antenna 1, an antenna 2, a mobile communications module 350, a wireless communications module 360, an audio module 370, a speaker 370A, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like. The sensor module 380 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 310 may include one or more processing units. For example, the processor 310 may include an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or two or more different processing units may be integrated into one component.

A memory may be further disposed in the processor 310, and is configured to store a computer program and/or data. In some embodiments, the memory in the processor 310 is a cache. The memory may store a computer program and/or data that are/is just used or cyclically used by the processor 310. If the processor 310 needs to use the computer program and/or the data again, the computer program and/or the data may be directly invoked from the memory. This avoids repeated access and reduces waiting time of the processor 310. Therefore, system efficiency is improved.

In some embodiments, the processor 310 may include one or more interfaces. For example, the processor 310 includes a universal serial bus (universal serial bus, USB) interface 330 and a subscriber identity module (subscriber identity module, SIM) interface 395. For another example, the processor 310 may further include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and/or the like.

It may be understood that the interface connection relationship between the modules shown in FIG. 3 is merely an example for description, and does not constitute a limitation on the mobile phone. In some other embodiments of this application, the mobile phone may alternatively use an interface connection manner different from that shown in FIG. 3. For example, the modules are connected by using a bus.

The charging management module 340 is configured to receive a charging input from the charger. The charger may be a wireless charger or a wired charger. In some embodiments of wired charging, the charging management module 340 may receive a charging input from the wired charger through the USB interface 330. In some embodiments of wireless charging, the charging management module 340 may receive a wireless charging input by using a wireless charging coil of the mobile phone. The charging management module 340 supplies power to the mobile phone by using the power management module 341 while charging the battery 342.

The power management module 341 is configured to connect the battery 342 and the charging management module 340 to the processor 310. The power management module 341 receives an input of the battery 342 and/or the charging management module 340, and supplies power to the processor 310, the internal memory 321, an external memory, the display 394, the camera 393, the wireless communications module 360, and the like. The power management module 341 may further be configured to monitor parameters such as a battery capacity, a battery cycle count, and a battery state of health (electric leakage and impedance). In some other embodiments, the power management module 341 may alternatively be disposed in the processor 310. In some other embodiments, the power management module 341 and the charging management module 340 may alternatively be disposed in a same component.

A wireless communications function of the mobile phone may be implemented by using the antenna 1, the antenna 2, the mobile communications module 350, the wireless communications module 360, the modem, the baseband processor, and the like.

The antenna 1 and the antenna 2 are configured to transmit and receive an electromagnetic wave signal. Each antenna in the mobile phone may be configured to cover one or more communications frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 350 may provide a wireless communications solution that is applied to a mobile phone and that includes standards such as 2G/3G/4G/5G. The mobile communications module 350 may include at least one filter, a switch, a power amplifier, a low noise amplifier (low noise amplifier, LNA), and the like.

The wireless communications module 360 may provide a wireless communications solution that is applied to the mobile phone, and that includes a wireless local area network (wireless local area networks, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the mobile phone, the antenna 1 and the mobile communications module 350 are coupled, and the antenna 2 and the wireless communications module 360 are coupled, so that the mobile phone can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation system, SBAS).

The GPU of the mobile phone, the display 394, the application processor, and the like implement a display function. The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone may include one or N displays 394, where N is a positive integer greater than 1.

The mobile phone may implement a photographing function by using the ISP, the camera 393, the video codec, the GPU, the display 394, the application processor, and the like. The camera 393 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the mobile phone may include one or N cameras 393, where N is a positive integer greater than 1.

The external memory interface 320 may be configured to connect to an external storage card, for example, a micro SD card, to extend a storage capability of the mobile phone. The external storage card communicates with the processor 310 through the external memory interface 320, to implement a data storage function. For example, a file such as music or a video is stored in the external storage card.

The internal memory 321 includes a running memory (memory) and a built-in memory. The running memory may be configured to store a computer program and/or data, and the like. The processor 310 executes various functional applications of the mobile phone and data processing by running the computer program stored in the running memory. For example, the running memory may include a high speed random access memory. The built-in memory may also be referred to as a built-in external memory or the like, and may be configured to store a computer program and/or data. For example, the built-in memory may store an operating system, an application, and the like. The mobile phone usually loads a computer program and/or data in the built-in memory to the running memory, so that the processor 310 runs a corresponding computer program and/or data to implement a corresponding function. In addition, the internal memory 321 may include a nonvolatile memory, for example, at least one magnetic disk storage device, a flash memory, and a universal flash storage (universal flash storage, UFS).

The mobile phone implements an audio function by using the audio module 370, the speaker 370A, the receiver 370B, the microphone 370C, the headset jack 370D, the application processor, and the like. For example, music playback, recording, and the like.

The button 390 includes a power button, a volume button, and the like. The button 390 may be a mechanical button, or a touch button. The mobile phone may receive a button input, and generate a button signal input related to user setting and function control of the mobile phone.

The motor 391 may generate a vibration prompt. The motor 391 may be configured to produce an incoming call vibration prompt and a touch vibration feedback. For example, touch operations performed on different applications (for example, photographing and audio playback) may correspond to different vibration feedback effects. The motor 391 may also correspond to different vibration feedback effects for touch operations performed on different regions of the display 394. Different application scenarios (for example, a time reminder, information receiving, an alarm clock, and a game) may alternatively correspond to different vibration feedback effects. A touch vibration feedback effect may be further customized.

The indicator 392 may be an indicator light, and may be configured to indicate a charging status and a power change, or may be configured to indicate a message, a missed call, a notification, and the like.

It may be understood that the schematic structure in the embodiments of this application does not constitute a specific limitation on the mobile phone and the head unit. In some other embodiments of this application, the mobile phone and the head unit may include more or fewer components than those shown in the figure, or some components may be combined, or some components may be split, or there may be a different component layout. The components shown in the figure may be implemented by using hardware, software, or a combination of software and hardware.

The following describes the embodiments of this application in detail by using a head unit and a mobile phone having a hardware structure shown in FIG. 3.

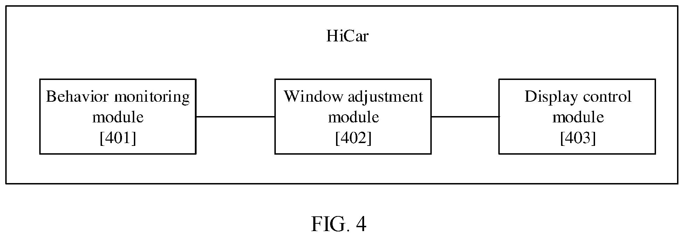

FIG. 4 is a schematic diagram of a software structure of an application HiCar on a mobile phone. As shown in the figure, HiCar includes a behavior monitoring module 401, a window adjustment module 402, and a display control module 403.

The behavior monitoring module 401 is configured to receive an external input, and notify the window adjustment module 402 according to the external input, to adjust a size of an interface that needs to be displayed on a head unit. For ease of description, the interface that needs to be displayed on the head unit is referred to as a head unit interface for short, and an interface displayed on the mobile phone is referred to as a mobile phone interface for short.

For example, the external input may be an operation performed by a user on the mobile phone, or may be an operation performed by the user on the head unit. When the external input is an operation performed by the user on the head unit, the behavior monitoring module 401 receives the external input sent by the head unit. For example, the operation performed by the user on a head unit may be a gesture operation performed by the user on the head unit screen, or an operation performed by the user on a physical button on the head unit. This is not limited. For another example, the external input may alternatively be a voice instruction.

For example, the behavior monitoring module 401 may be started after the mobile phone is successfully connected to the head unit, to monitor an external input in real time.

The window adjustment module 402 is configured to adjust a size of an interface of an application that needs to be displayed on the head unit. For ease of description, an interface of an application displayed on the head unit is referred to as a head unit interface of the application for short below. For example, when a head unit interface of an application is displayed in full screen on the head unit screen, and an operation of exiting full screen for the application is received, the window adjustment module 402 adjusts a size of the head unit interface of the application to a size for a non-full-screen display. For example, a size of a head unit interface of an application during non-full-screen display is a value obtained after a size of the head unit screen minus a size of a navigation bar region. For another example, when an interface of an application is displayed in non-full screen on the head unit screen, and an operation of full-screen display for the application is received, the window adjustment module 402 adjusts a size of the head unit interface of the application to a size for a full-screen display.

In some embodiments, if the window adjustment module 402 adjusts a size of a head unit interface of an application to a size for a full-screen display, the window adjustment module may further send a navigation bar hiding message to the display control module 403. Alternatively, if the window adjustment module 402 adjusts a size of a head unit interface of an application to a size for a non-full-screen display, the window adjustment module may further send a navigation bar display message to the display control module 403.

The display control module 403 is configured to control displaying and hiding of a navigation bar according to a message from the window adjustment module 402. For example, when receiving a navigation bar hiding message, the display control module 403 sets the navigation bar to be invisible, that is, hides the navigation bar. For another example, when receiving a navigation bar display message, the display control module 403 sets the navigation bar to be visible, that is, displays the navigation bar.

It should be understood that FIG. 4 is merely an example of the software architecture of HiCar, and does not constitute a limitation on the software architecture of HiCar. HiCar in the embodiments of this application may have more or fewer modules, or the like. The modules shown in FIG. 4 may be included in hardware including one or more signal processing and/or application-specific integrated circuits, software, or a combination of hardware and software.

The display method in the embodiments of this application is described by using an example in which an in-vehicle system supported by a head unit and a mobile phone is HiCar.

As shown in FIG. 5A-1 and FIG. 5A-2, a head unit displays an interface 500. The interface 500 includes an icon of an application that has been installed on the head unit. For example, an icon 5001 is used to identify HiCar. In response to tapping the icon 5001 by the user, the head unit sends a broadcast message and displays an interface 501. For example, the broadcast message includes a name or an identifier of the head unit. The interface 501 includes a verification code 123456. In some embodiments, the interface 501 may further include a cancellation option, to stop, in response to tapping the cancellation option by the user, the head unit from continuing to establish the connection to the mobile phone. An example in which the name of the head unit included in the broadcast message is BJ530 is used. When displaying an interface 510 shown in FIG. 5B-1 and FIG. 5B-2, the mobile phone receives the broadcast message from the head unit, and pops up a prompt box 520. The prompt box 520 is used to prompt the user that a head unit named BJ530 is found. Further, the prompt box 520 further includes a cancellation option and a connection option. In response to tapping the connection option by the user, the mobile phone displays an interface 530. The interface 530 is used by the user to enter a verification code. In response to completion of entering the verification code in the interface 530, the mobile phone sends a connection establishment request to the head unit, and displays a prompt box 540. The connection establishment request includes the verification code entered by the user. The prompt box 540 is used to prompt the user that a connection is being established between the mobile phone and the head unit. The head unit receives the connection establishment request from the mobile phone, and displays an interface 502. The interface 502 is used to prompt the user that a connection is being established between the head unit and the mobile phone. When displaying the interface 502, the head unit further determines whether the verification code in the connection establishment request is consistent with the verification code included in the interface 501. If the verification code in the connection establishment request is consistent with the verification code included in the interface 501, the connection between the head unit and the mobile phone is successfully established, and the head unit sends a connection establishment success response to the mobile phone. After receiving the connection establishment success response, the head unit maps the application installed on the head unit to the head unit, and displays a prompt box 550. The prompt box 550 is used to prompt the user that the mobile phone is connected to the head unit. In some embodiments, the prompt box 550 further includes a disconnection option. The user may tap the disconnection option to disconnect the mobile phone from the head unit. After the mobile phone maps the application installed on the mobile phone to the head unit, the head unit may display a navigation bar in a region 5010, and display current time in a region 5020, as shown in an interface 503 in FIG. 5A-1 and FIG. 5A-2. In response to an upward sliding operation performed by the user in the region 5020 in the interface 503, the head unit displays, in the region 5020, an icon of the application mapped from the mobile phone to the head unit. For example, applications mapped from the mobile phone to the head unit are Video, Phone, Music, and Map. In response to an upward sliding of the user in the region 5020 in the interface 503, the head unit displays an icon of Video, an icon of Music, an icon of Map, and an icon of Phone in the region 5020. In this way, the head unit is successfully wirelessly connected to the mobile phone.

Further, in some embodiments, content in the navigation bar may change in response to an upward sliding operation performed by the user in the region 5020. For example, the navigation bar in the interface 503 includes current time, an icon 5002, an icon 5003, an icon 5004, an icon 5005, and an icon 5006, and the navigation bar in an interface 504 includes current time, an icon 5007, the icon 5003, the icon 5004, the icon 5005, and the icon 5006. For example, the icon 5002 is used to control to display, in the region 5020, an icon of an application mapped from the mobile phone to the head unit, the icon 5003 is used by the user to start map navigation, the icon 5004 is used by the user to start Music, the icon 5005 is used by the user to quickly make a call, the icon 5006 is used to start a voice assistant, and the icon 5007 is used to switch to a home screen. The home screen may be shown in the interface 503. It should be noted that, in response to the upward sliding operation performed by the user in the region 5020, the content in the navigation bar may not change. The foregoing is merely an example for describing content included in the navigation bar. A quantity of icons included in the navigation bar and/or functions of the icons are/is not limited in the embodiments of this application.

It should be noted that, in some other embodiments, after the mobile phone maps the application installed on the mobile phone to the head unit, the head unit may directly display the interface 504 in FIG. 5A-1 and FIG. 5A-2 by default without displaying the interface 503. For example, in response to a downward sliding operation performed by the user, the head unit switches from the interface 504 to the interface 503 for display.

Based on the process of establishing the connection between the head unit and the mobile phone shown in FIG. 5A-1 and FIG. 5A-2, in still some embodiments, when the mobile phone is connected to the head unit for the first time, in response to completion of entering a verification code in the interface 530, the mobile phone sends a connection establishment request to the head unit. A prompt box 560 shown in FIG. 5C may be first displayed, and after the user taps an "Allow" option in the prompt box 560, the mobile phone displays a prompt box 540 shown in FIG. 5B-1 and FIG. 5B-2. The prompt box 560 is used to prompt the user whether to allow automatic connection to HiCar. The prompt box 560 further includes a disallow option and the allow option. In response to tapping the allow option by the user, when the mobile phone is connected to the head unit again, the mobile phone may be automatically connected to the head unit after discovering the head unit whose name is BJ530, and skip steps in which the user taps the connection option in the prompt box 520 and enters the verification code in the interface 530, thereby reducing user operations.

Certainly, the foregoing is merely an example of implementing the connection between the mobile phone and the head unit, and does not constitute a limitation on the connection between the mobile phone and the head unit. In the embodiments of this application, the mobile phone and the head unit may alternatively be wirelessly connected in another manner, for example, based on near field communication (near field communication, NFC) or a wireless local area network (wireless local area network, WLAN). It should be understood that, in the embodiments of this application, the mobile phone and the head unit may alternatively be connected in a wired manner by using a data cable (for example, a USB cable). This is not limited. In addition, in the foregoing example, the user first taps the icon 5001 of HiCar on the head unit to initiate a connection. Optionally, the user may alternatively tap an icon of HiCar displayed on a mobile phone interface to initiate a connection between the mobile phone and the head unit.

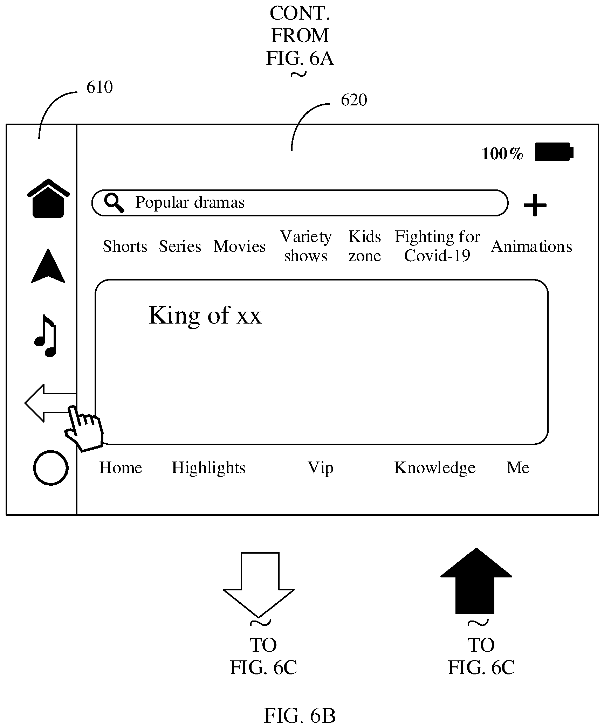

In some embodiments, after the mobile phone is successfully connected to the head unit, an example in which the mobile phone maps, to the head unit, Video, Music, Phone, and Map that are installed on the mobile phone is used. As shown in FIG. 6A, a head unit screen 600 includes a region 610 and a region 620. The head unit displays a navigation bar in the region 610, and displays, in the region 620, an icon of an application mapped from the mobile phone to the head unit, for example, an icon 601. The icon 601 is used to identify Video installed on the mobile phone. In response to tapping the icon 601 by the user, the head unit displays a head unit interface of Video in the region 620, and displays a navigation bar in the region 610, as shown in FIG. 6B.

For example, the head unit receives an operation of tapping the icon 601 by the user, and notifies the mobile phone of the operation. When a head unit interface of an application on the head unit screen is displayed in a non-full-screen mode, in response to the foregoing operation, the mobile phone adjusts, by default, a size of a head unit interface of Video to a size for a non-full-screen display, and notifies the head unit, so that the head unit can display the head unit interface of Video in the region 620.

For example, as shown in FIG. 6A, when icons of a plurality of applications are displayed in the region 620 of the head unit screen 600, the head unit receives an operation of tapping the icon 601 by the user, and notifies the behavior monitoring module 401 on the mobile phone. After receiving the notification, the behavior monitoring module 401 notifies the window adjustment module 403 to adjust the size of the head unit interface of Video to a size for a non-full-screen display. The window adjustment module 403 adjusts the size of the head unit interface of Video to the size for the non-full-screen display based on a size of the head unit screen, and then sends a navigation bar hiding message to the display control module 403. After receiving the navigation bar hiding message, the display control module 403 controls the head unit to display the head unit interface of Video in the region 620 in the size for the non-full-screen display and display the navigation bar in the region 610.

For example, the window adjustment module 403 may adjust the size of the head unit interface of Video to a size for a non-full-screen display based on a size of the head unit screen by invoking a system layer full-screen interface.

For example, a manner of displaying a head unit interface of an application on the head unit screen by the mobile phone by default may be predefined by research and development personnel in a program of the head unit, and cannot be changed by the user. Alternatively, a manner of displaying a head unit interface of an application on the head unit screen by the mobile phone by default may be set by the user according to a requirement of the user. For example, the user may set a default display manner for a head unit interface of an application in the in-vehicle system by using a setting interface of the in-vehicle system. For example, the setting interface of the in-vehicle system may be shown in A in FIG. 8, and includes a control 801. The control 801 is configured to control a head unit interface of an application to be displayed in full screen by default or displayed in non-full screen by default. For example, when the control 801 is in an on (ON) state, a default display manner in the in-vehicle system for a head unit interface of an application is full-screen display. For another example, when the control is in an off (OFF) state, a default display manner in the in-vehicle system for a head unit interface of an application is non-full-screen display.

The foregoing shows that a head unit interface of an application is displayed on the head unit screen in a non-full-screen manner by default.

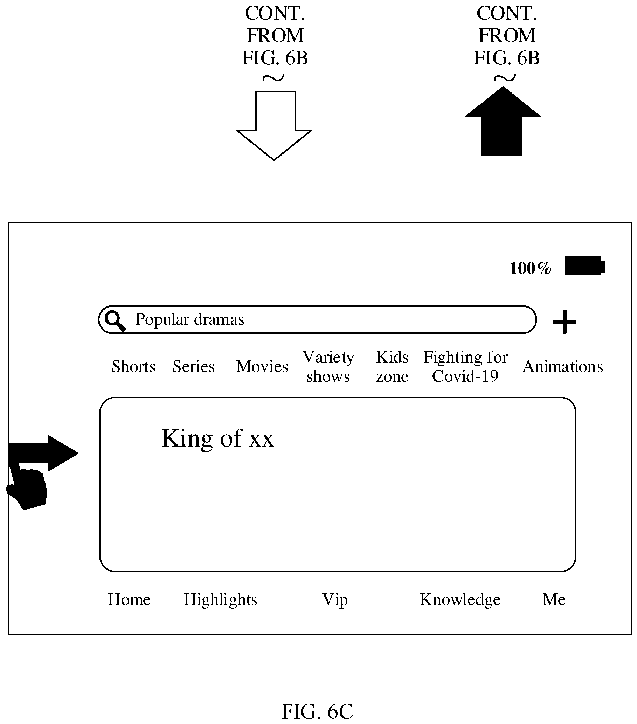

Further, in some embodiments, as shown in FIG. 6B, the head unit displays the navigation bar in the region 610, and displays the head unit interface of Video in the region 620. In response to sliding to the left by the user, the head unit hides the navigation bar, and displays the head unit interface of Video in full screen, as shown in FIG. 6C.

For example, the head unit receives an operation of sliding to the left by the user, and notifies the mobile phone. When the head unit displays the head unit interface of Video in a non-full-screen mode, in response to the foregoing operation, the mobile phone adjusts a size of the head unit interface of Video to a size for a full-screen display, and notifies the head unit, so that the head unit can hide the navigation bar and display the head unit interface of Video in full screen.

Alternatively, in some other embodiments, as shown in FIG. 6C, the head unit displays the head unit interface of Video in full screen. In response to sliding to the right by the user, the head unit displays the navigation bar in the region 610, and displays the head unit interface of Video in the region 620.

For example, the head unit receives an operation of sliding to the right by the user, and notifies the mobile phone. When the head unit displays the head unit interface of Video in a full-screen mode, in response to the foregoing operation, the mobile phone adjusts a size of the head unit interface of Video to a size for a non-full-screen display, and notifies the head unit, so that the head unit can display the navigation bar in the region 610 and display the head unit interface of Video in the region 620.

In some embodiments, as shown in FIG. 6B, the head unit displays the navigation bar in the region 610, and displays the head unit interface of Video in the region 620. If the head unit receives an operation of sliding to the right by the user, the head unit does not respond. Alternatively, as shown in FIG. 6C, the head unit displays the head unit interface of Video in full screen. If the head unit receives an operation of sliding to the left by the user, the head unit does not respond.

In some other embodiments, as shown in FIG. 6A, the head unit displays the navigation bar in the region 610, and displays, in the region 620, an icon of an application mapped from the mobile phone to the head unit, for example, the icon 601. In response to tapping the icon 601 by the user, a prompt box 700 pops up, the head unit interface of Video is displayed in the region 620, and the navigation bar is displayed in the region 610, as shown in FIG. 7. The prompt box 700 is used to prompt the user with an operation manner of controlling full-screen/non-full-screen display of a head unit interface of an application, to provide convenience for the user to learn of the operation manner.

Further, in some embodiments, when the in-vehicle system supports the user in customizing an operation manner of controlling full-screen/non-full-screen display of a head unit interface of an application, the prompt box 700 may further prompt the user to support an operation manner of controlling full-screen/non-full-screen display of a head unit interface of an application, to facilitate the user in performing customization. For example, as shown in FIG. 7, the prompt box 700 includes prompt information "Support customization of an operation manner of full-screen/non-full-screen display of an application". In response to tapping, by the user, "Support customization of an operation manner of full-screen/non-full-screen display of an application", the mobile phone is enabled to display the setting interface of the in-vehicle system. Alternatively, the user may operate the mobile phone, so that the mobile phone displays the setting interface of the in-vehicle system. A manner in which the mobile phone displays the setting interface of the in-vehicle system is not limited in the embodiments of this application.

For example, the setting interface of the in-vehicle system may be shown in A in FIG. 8, and includes a control 802, a control 803, and a control 804.

The control 802 is configured to customize a gesture operation manner of controlling full-screen/non-full-screen display of a head unit interface of an application. For example, it is customized by the user that when two fingers or a single finger slide/slides from an inside of the head unit screen to an edge, the head unit interface of the application is controlled to be displayed in full screen. For another example, it is customized by the user that when two fingers or a single finger tap/taps the screen twice, the head unit interface of the application is controlled to be displayed in full screen or exit a full-screen display. For example, when the head unit displays the head unit interface of Video in full screen, the head unit interface of Video exits full-screen display in response to tapping the screen twice by the user by using two fingers or a single finger. For another example, when the head unit displays the head unit interface of Video in non-full screen, the head unit interface of Video is displayed in full screen in response to tapping the screen twice by the user by using two fingers or a single finger. It should be noted that the control 802 may be configured to customize one or more gesture operation manners for controlling full-screen/non-full-screen display of a head unit interface of an application. This is not limited.

The control 803 is configured to customize a button operation manner of controlling full-screen/non-full-screen display of a head unit interface of an application. For example, in response to tapping the control 803 by the user, the mobile phone displays an interface shown in B in FIG. 8. The interface shown in B in FIG. 8 includes a physical button and/or a virtual button on the head unit, and a physical button and/or a virtual button on the mobile phone, for example, a volume control button on the head unit, a home screen button on the mobile phone, or a power button on the mobile phone. For example, the user may select a volume control button on the head unit, and customize a button operation manner of controlling full-screen/non-full-screen display of a head unit interface of an application as follows: The user presses the volume control button on the head unit. For example, when the head unit displays the head unit interface of Video in full screen, in response to pressing the volume control button on the head unit by the user, the head unit interface of Video exits full-screen display. For another example, when the head unit displays the head unit interface of Video in non-full screen, in response to pressing the volume control button on the head unit by the user, the head unit interface of Video is displayed in full screen.

The control 804 is configured to customize a voice operation manner of controlling full-screen/non-full-screen display of a head unit interface of an application. For example, the user starts the voice assistant by selecting the control 804, and customizes a voice instruction for exiting full-screen display of a head unit interface of an application as "exit full-screen display" or "display the navigation bar". In this case, the head unit may exit full-screen display of the head unit interface of the application in response to the user saying "exit full-screen display" or "display the navigation bar". For another example, the user starts the voice assistant by selecting the control 804, and customizes a voice instruction for displaying a head unit interface of an application in full screen as "display in full screen" or "hide the navigation bar". In this case, the head unit may display the head unit interface of the application in full screen in response to the user saying "display in full screen" or "hide the navigation bar".

It should be noted that the foregoing is merely an example for describing customization an operation manner of controlling full-screen/non-full-screen display of a head unit interface of an application. In the embodiments of this application, an operation manner of full-screen/non-full-screen display of a head unit interface of an application may alternatively be customized in another manner. For example, in response to tapping prompt information "Support customization of an operation manner of full-screen/non-full-screen display of an application" in the prompt box 700 by the user, the head unit displays a setting interface of the in-vehicle system. Customization is performed by using the setting interface of the in-vehicle system displayed on the head unit.

It should be further noted that, in the embodiments of this application, one or more operation manners for controlling full-screen/non-full-screen display of a head unit interface of an application may be set. For example, the user may set one or more operation manners for controlling full-screen display of a head unit interface of an application, and/or the user may set one or more operation manners for controlling exiting full-screen display of a head unit interface of an application. This is not limited.

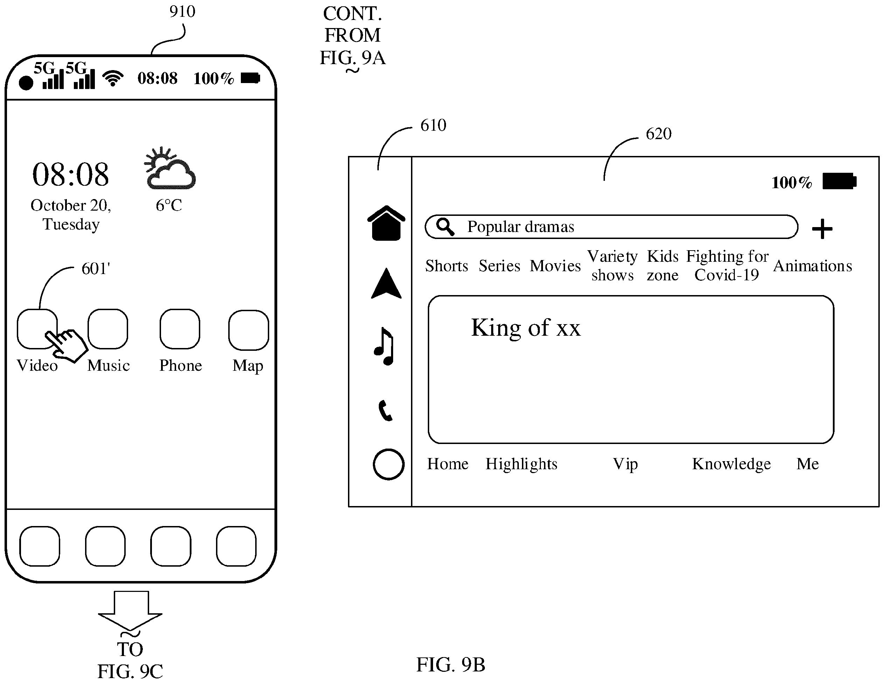

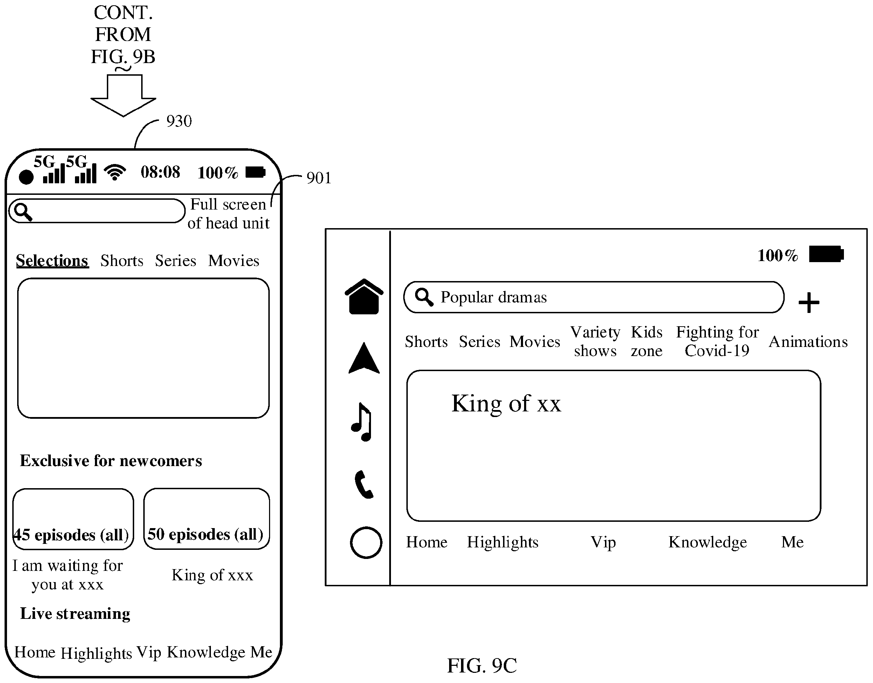

In some other embodiments of this application, after the mobile phone and the head unit are successfully connected, as shown in FIG. 9A, the mobile phone displays an interface 900, the head unit displays the navigation bar in the region 610, and displays, in the region 620, an icon of an application mapped from the mobile phone to the head unit. In response to tapping the icon 601 by the user, the head unit displays the head unit interface of Video in the region 620, as shown in FIG. 9B. Further, in response to tapping, by the user, an icon 601' displayed on the mobile phone, the mobile phone displays a mobile phone interface of Video. For example, the mobile phone interface of Video is shown in an interface 930 in FIG. 9C, and includes an icon 901 used to control full-screen display of the head unit. The user may control, by tapping the icon 901, the head unit to display the head unit interface of Video in full screen and hide the navigation bar.

For example, as shown in FIG. 10A, when the mobile phone displays the mobile phone interface of Video, and the head unit displays the head unit interface of Video in non-full screen, in response to tapping the icon 901 by the user, the head unit displays the head unit interface of Video in full screen, as shown in FIG. 10B. Further, in some embodiments, in response to tapping the icon 901 by the user, the mobile phone switches the icon 901 to an icon 901'. When the mobile phone displays the mobile phone interface of video, and the head unit displays the head unit interface of Video in full screen as shown in FIG. 10B, in response to tapping the icon 901' by the user, the head unit displays the head unit interface of Video in non-full screen, and the mobile phone switches the icon 901' to the icon 901. Therefore, the user can control, by using the mobile phone, the head unit to display the head unit interface of Video in full screen/non-full screen.

Certainly, it may be understood that the foregoing is merely an example for describing how the mobile phone controls the head unit to display the head unit interface of Video in full screen/non-full screen, and does not constitute a limitation on the embodiments of this application. In the embodiments of this application, the user may alternatively control, by performing another operation on the mobile phone, for example, a shortcut gesture operation, the head unit to display the head unit screen in full screen/non-full screen.

In addition, considering that the head unit screen includes two scenarios: a landscape screen and a portrait screen, for example, when the head unit screen is the landscape screen, and the head unit displays a head unit interface of an application in non-full screen, as shown in A in FIG. 11, a region 1110 is located on a left side of a region 1120, the region 1110 is used to display a navigation bar, and the region 1120 is used to display the head unit interface of the application. In this case, when the head unit displays the head unit interface of the application in full screen, as shown in B in FIG. 11, the region 1110 and the region 1120 are used to display the head unit interface of the application. For another example, when the head unit screen is the portrait screen, and the head unit displays the head unit interface of the application in non-full screen, as shown in A in FIG. 12, a region 1210 is located on a lower side of a region 1220, the region 1210 is used to display a navigation bar, and the region 1220 is used to display the head unit interface of the application. In this case, when the head unit displays the head unit interface of the application in full screen, as shown in B in FIG. 12, the region 1210 and the region 1220 are used to display the head unit interface of the application.

It should be noted that, for another application mapped from the mobile phone to the head unit, a manner of displaying a head unit interface on the head unit screen and customizing an operation manner of full-screen and non-full-screen display of the application may refer to a related implementation of Video. Details are not described herein again. For example, an example in which applications mapped from the mobile phone to the head unit are Video, Phone, Music, and Map is used. If a head unit interface of an application in the head unit is displayed in a non-full-screen manner by default, head unit interfaces for Video, Phone, Music, and Map are all displayed in a non-full-screen manner by default. It should be further noted that, for different applications in the embodiments of this application, operation manners used to control full-screen/non-full-screen display of a head unit interface may be different or may be the same. This is not limited.

The foregoing embodiments may be used in combination with each other, or may be used separately. This is not limited.

Based on a same concept, an embodiment of this application further provides an electronic device. As shown in FIG. 13, the electronic device includes a processor 1301, a memory 1302, a display 1303, and a transceiver 1304. For example, the foregoing components may be connected by using one or more communications buses. One or more computer programs are stored in the memory 1302 and are configured to be executed by the processor 1301. The one or more computer programs include instructions, and the instructions may be used to enable the electronic device to perform the steps of the methods in the foregoing embodiments. Further, in some embodiments, the electronic device may further include a sensor 1305, for example, a touch sensor.

For example, the processor 1301 may be specifically the processor 310 shown in FIG. 3, the memory 1302 may be specifically the internal memory 321 shown in FIG. 3 and/or the external memory connected to the electronic device, the transceiver 1304 may be the mobile communications module 350 and/or the wireless communications module 360 shown in FIG. 3, the display 1303 may be specifically the display 394 shown in FIG. 3, and the sensor 1305 may be specifically the sensor 380 shown in FIG. 3. This is not limited in the embodiments of this application.

In addition, an embodiment of this application further provides a graphical user interface (graphical user interface, GUI) on an electronic device. The graphical user interface specifically includes a graphical user interface displayed when the electronic device performs the foregoing method embodiments.

According to the context, the term "when..." used in the foregoing embodiments may be interpreted as a meaning of "if...", "after...", "in response to determining...", or "in response to detecting...". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk, or a magnetic tape), an optical medium (for example, a DVD), a semiconductor medium (for example, a solid-state drive Solid-State Drive (SSD)), or the like. In a case in which no conflict occurs, the solutions in the foregoing embodiments may be combined for use.

It should be noted that a part of this patent application document includes copyright protected content. The copyright owner reserves the copyright except copies are made for the patent documents or the recorded content of the patent documents in the Patent Office.

## Claims

1. A display method, applied to a system comprising a first electronic device and a second electronic device, wherein the method comprises:
establishing, by the first electronic device, a connection to the second electronic device, wherein the first electronic device comprises a first application;
sending, by the first electronic device, information about the first application to the second electronic device;
displaying, by the second electronic device, an icon of the first application on a display in response to the received information about the first application;
in response to an operation performed by a user on the icon of the first application on the second electronic device, displaying, by the second electronic device, a navigation bar in a first region of the display and displaying a first interface of the first application in a second region of the display;
detecting a first operation on the second electronic device; and
in response to the first operation, hiding, by the second electronic device, the navigation bar and displaying the first interface of the first application on the display in full screen.

2. The method according to claim 1, wherein after the hiding, by the second electronic device, the navigation bar and displaying the first interface of the first application on the display in full screen, the method further comprises:
detecting a second operation performed on the second electronic device; and
in response to the second operation, displaying, by the second electronic device, the navigation bar in the first region of the display and displaying the first interface of the first application in the second region of the display.

3. The method according to claim 1 or 2, wherein the method further comprises:
displaying, by the second electronic device, a prompt box in response to the operation performed by the user on the icon of the first application on the second electronic device, wherein the prompt box is used to prompt the user with an operation manner of controlling full-screen display or non-full-screen display of an interface of an application.

4. The method according to claim 3, wherein the method further comprises:
displaying, by the first electronic device, a second interface in response to an operation performed by the user on the prompt box, wherein the second interface comprises a first option; and
setting a full-screen operation manner of an application to a third operation in response to an operation performed by the user on the first option.

5. The method according to any one of claims 1 to 4, wherein the method further comprises:
displaying, by the first electronic device, a third interface of the first application in response to an operation performed by the user on an icon of the first application on the first electronic device;
when the second electronic device displays the navigation bar in the first region of the display and displays the first interface of the first application in the second region of the display, detecting a fourth operation performed on the first electronic device; and
in response to the fourth operation, hiding, by the second electronic device, the navigation bar and displaying the first interface of the first application on the display in full screen.

6. The method according to claim 5, wherein the method further comprises:
when the second electronic device hides the navigation bar and displays the first interface of the first application on the display in full screen, detecting a fifth operation performed on the first electronic device; and
in response to the fifth operation, displaying, by the second electronic device, the navigation bar in the first region of the display and displaying the first interface of the first application in the second region of the display.

7. The method according to any one of claims 1 to 6, wherein
the first electronic device is a mobile phone or a tablet computer, and the second electronic device is a head unit.

8. A display method, wherein the method comprises:
establishing, by a first electronic device, a connection to a second electronic device, wherein the first electronic device comprises a first application, and the second electronic device displays an icon of the first application;
receiving, by the first electronic device, first indication information from the second electronic device, wherein the first indication information is used to indicate an operation performed by a user on the icon of the first application on the second electronic device;
sending, by the first electronic device, a first interface of the first application to the second electronic device in response to the received first indication information, so that the second electronic device displays a navigation bar in a first region of a display, and displays the first interface of the first application in a second region of the display;
receiving, by the first electronic device, second indication information from the second electronic device, wherein the second indication information is used to indicate a first operation performed by the user on the second electronic device; and
sending, by the first electronic device, a first navigation bar hiding message to the second electronic device in response to the received second indication information, wherein the first navigation bar hiding message is used to indicate the second electronic device to hide the navigation bar and display the first interface of the first application on the display in full screen.

9. The method according to claim 8, wherein after the sending, by the first electronic device, a navigation bar hiding message to the second electronic device, the method further comprises:
receiving, by the first electronic device, third indication information from the second electronic device, wherein the third indication information is used to indicate a second operation performed by the user on the second electronic device; and
sending, by the first electronic device, a first navigation bar display message to the second electronic device in response to the received third indication information, wherein the first navigation bar display message is used to indicate the second electronic device to display the navigation bar in the first region of the display and display the first interface of the first application in the second region of the display.

10. The method according to claim 8 or 9, wherein the method further comprises:
receiving, by the first electronic device, fourth indication information, wherein the fourth indication information is used to indicate an operation performed by the user on the icon of the first application on the second electronic device; and
sending, by the first electronic device, a first message to the second electronic device in response to the received fourth indication information, wherein the first message is used to indicate the second electronic device to display a prompt box, and the prompt box is used to prompt the user with an operation manner of controlling full-screen display or non-full-screen display of an interface of an application.

11. The method according to claim 10, wherein the method further comprises:
receiving, by the first electronic device, fifth indication information, wherein the fifth indication information is used to indicate an operation performed by the user on the prompt box;
displaying, by the first electronic device, a second interface in response to the received fifth indication information, wherein the second interface comprises a first option; and
setting, by the first electronic device, a full-screen operation manner of an application to a third operation in response to an operation performed by the user on the first option.

12. The method according to any one of claims 8 to 11, wherein the method further comprising:
displaying, by the first electronic device, a third interface of the first application in response to an operation performed by the user on an icon of the first application on the first electronic device;
when the second electronic device displays the navigation bar in the first region of the display and displays the first interface of the first application in the second region of the display, detecting, by the first electronic device, a fourth operation performed by the user on the first electronic device; and
sending, by the first electronic device, second navigation bar hiding information to the second electronic device in response to the fourth operation, wherein the second navigation bar hiding information is used to indicate the second electronic device to hide the navigation bar and display the first interface of the first application on the display in full screen.

13. The method according to claim 12, wherein the method further comprising:
when the second electronic device hides the navigation bar and displays the first interface of the first application on the display in full screen, detecting, by the first electronic device, a fifth operation performed on the first electronic device; and
sending, by the first electronic device, a second navigation bar display message to the second electronic device in response to the fifth operation, wherein the second navigation bar display message is used to indicate the second electronic device to display the navigation bar in the first region of the display and display the first interface of the first application in the second region of the display.

14. An electronic device, comprising at least one processor and at least one memory, wherein
the one or more memories store one or more computer programs, the one or more computer programs comprise instructions, and when the instructions are executed by the one or more processors, the electronic device is enabled to perform the method according to any one of claims 8 to 13.

15. A computer-readable storage medium, wherein the computer-readable storage medium comprises a computer program, and when the computer program is run on an electronic device, the electronic device is enabled to perform the method according to any one of claims 8 to 13.

16. A graphical user interface on an electronic device, wherein the electronic device has a display, one or more memories, and one or more processors, the one or more processors are configured to execute one or more computer programs stored in the one or more memories, and the graphical user interface comprises a graphical user interface displayed when the electronic device performs the method according to any one of claims 8 to 13.
